(19) Europäisches Patentamt / European Patent Office / Office européen des brevets

(11) **EP 4 375 314 A1**

(12) **EUROPEAN PATENT APPLICATION**
published in accordance with Art. 153(4) EPC

(43) Date of publication:
**29.05.2024 Bulletin 2024/22**

(21) Application number: **23844055.6**

(22) Date of filing: **01.06.2023**

(51) International Patent Classification (IPC):
*C08J 3/24* $^{(2006.01)}$    *C08J 3/12* $^{(2006.01)}$
*C08F 20/06* $^{(2006.01)}$    *F26B 3/18* $^{(2006.01)}$
*F26B 3/02* $^{(2006.01)}$

(52) Cooperative Patent Classification (CPC):
**C08F 20/06; C08J 3/12; C08J 3/24; F26B 3/02;
F26B 3/18**

(86) International application number:
**PCT/KR2023/007518**

(87) International publication number:
**WO 2024/071563 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.09.2022 KR 20220121702**

(71) Applicant: **LG Chem, Ltd.**
**Yeoui-daero, Youngdungpo-gu**
**Seoul 07336 (KR)**

(72) Inventors:
• **KIM, Jong Hun**
  **Daejeon 34122 (KR)**
• **KIM, Yong Jin**
  **Daejeon 34122 (KR)**
• **HAN, Soon Young**
  **Daejeon 34122 (KR)**
• **YEO, Yong Ho**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD FOR PREPARING SUPERABSORBENT POLYMER PARTICLE**

(57)    The present invention provides a method for preparing super absorbent polymer particles, includes: feeding a composition containing a water-soluble ethylenically unsaturated monomer having an acidic group of which at least a part is neutralized, an internal crosslinking agent, and a polymerization initiator to a polymerization reactor and subjecting the composition to a polymerization reaction to obtain a hydrous gel polymer; primary drying the hydrous gel polymer in a hot air dryer to obtain a primary dried substance; secondary drying the primary dried substance in a thermal conduction dryer to obtain a secondary dried substance; and pulverizing the secondary dried substance to obtain super absorbent polymer particles.

【FIG. 1】

EP 4 375 314 A1

**Description**

[Technical Field]

CROSS-REFERENCE TO RELATED APPLICATION

The present application claims the benefit of priority to Korean Patent Application No. 10-2022-0121702, filed on September 26, 2022, the entire contents of which are incorporated herein by reference.

Technical Field

The present invention relates to a method for preparing super absorbent polymer particles, and more particularly, to a method for preparing super absorbent polymer particles having improved drying uniformity and physical properties using two types of dryers.

[Background Art]

A super absorbent polymer (SAP) is a synthetic polymeric material capable of absorbing moisture in an amount of about 500 to 1,000 times its own weight. Various manufacturers have denominated it as different names, such as a super absorbency material (SAM) and an absorbent gel material (AGM). Although such super absorbent polymers started to be practically applied in sanitary products, now they have been widely used as water-retaining agents for gardening, water stop materials for civil engineering and construction, a sheet for raising seedlings, fresh-keeping agents in the food distribution field, materials for poultice, and the like, and have been mainly used as hygiene products such as diapers and sanitary pads.

Meanwhile, super absorbent polymer particles may be generally prepared through polymerization, drying, pulverization, and surface crosslinking steps. However, in a case where drying uniformity is reduced in the drying step, overdrying is performed, such that physical properties are deteriorated and a large amount of fine particles is generated in the pulverization step.

Therefore, there is a need for a drying method capable of improving the physical properties of the super absorbent polymer particles to be finally prepared and reducing the content of fine particles while achieving high drying uniformity in the drying step.

**[Disclosure]**

[Technical Problem]

In order to solve the problems mentioned in the background art, an object of the present invention is to provide a method for preparing super absorbent polymer particles capable of reducing the amount of fine particles generated in a pulverization step and securing physical properties of super absorbent polymer particles as a final product while performing a drying step with high drying uniformity.

[Technical Solution]

In one general aspect, a method for preparing super absorbent polymer particles includes: feeding a composition containing a water-soluble ethylenically unsaturated monomer having an acidic group of which at least a part is neutralized, an internal crosslinking agent, and a polymerization initiator to a polymerization reactor and subjecting the composition to a polymerization reaction to obtain a hydrous gel polymer; primary drying the hydrous gel polymer in a hot air dryer to obtain a primary dried substance; secondary drying the primary dried substance in a thermal conduction dryer to obtain a secondary dried substance; and pulverizing the secondary dried substance to obtain super absorbent polymer particles.

[Advantageous Effects]

According to the method for preparing super absorbent polymer particles of the present invention, the drying step may be performed by primary drying and secondary drying. The primary drying is performed in a hot air dryer, such that pores of the dried substance may be maintained, and the secondary drying is performed in a thermal conduction dryer, such that the drying uniformity may be improved. Through this, it is possible to solve the problem of introducing an undried substance into the next pulverization step, and thus, the amount of fine particles generated as the pulverization proceeds may be reduced. In addition, the physical properties of the final super absorbent polymer particles may be improved.

[Description of Drawings]

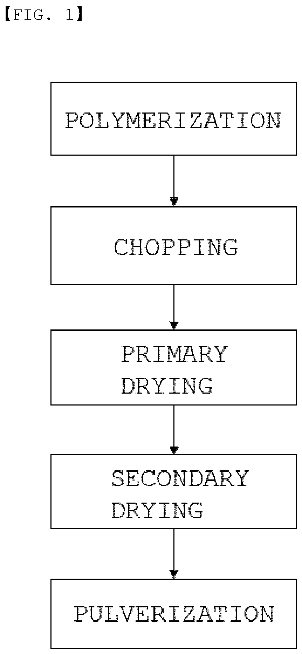

FIG. 1 is a flow chart illustrating a method for preparing super absorbent polymer particles according to an exemplary embodiment of the present invention.

[Best Mode]

The terms and words used in the description and claims of the present invention are not to be construed limitedly as having general or dictionary meanings but are to be construed as having meanings and concepts meeting the technical ideas of the present invention, based on a principle that the inventors are able to appropriately define the concepts of terms in order to describe their own inventions in the best mode.

Hereinafter, the present invention will be described in more detail with reference to FIG. 1 in order to assist in the understanding of the present invention.

A method for preparing super absorbent polymer particles according to an exemplary embodiment of the present invention may include: feeding a composition containing a water-soluble ethylenically unsaturated monomer having an acidic group of which at least a part is neutralized, an internal crosslinking agent, and a polymerization initiator to a polymerization reactor and subjecting the composition to a polymerization reaction to obtain a hydrous gel polymer; primary drying the hydrous gel polymer in a hot air dryer to obtain a primary dried substance; secondary drying the primary dried substance in a thermal conduction dryer to obtain a secondary dried substance; and pulverizing the secondary dried substance to obtain super absorbent polymer particles.

First, in the method for preparing super absorbent polymer particles according to an exemplary embodiment of the present invention, a step of feeding a composition containing a water-soluble ethylenically unsaturated monomer having an acidic group of which at least a part is neutralized, an internal crosslinking agent, and a polymerization initiator to a polymerization reactor and subjecting the composition to a polymerization reaction to obtain a hydrous gel polymer may be performed. As described above, the composition may contain a water-soluble ethylenically unsaturated monomer, an internal crosslinking agent, and a polymerization initiator, and in addition, may additionally contain additives such as a thickener, a plasticizer, a storage stabilizer, and an antioxidant, if necessary.

In this case, the water-soluble ethylenically unsaturated monomer may be (meth) acrylic acid or a salt thereof. When an alkali metal salt having acrylic acid of which at least a part is neutralized, which is acrylic acid or a sodium salt thereof, is used as the water-soluble ethylenically unsaturated monomer, super absorbent polymer particles having improved absorbency may be obtained.

In addition, as the water-soluble ethylenically unsaturated monomer, an anionic monomer such as maleic anhydride, fumaric acid, crotonic acid, itaconic acid, 2-acryloylethane sulfonic acid, 2-methacryloylethane sulfonic acid, 2-(meth)acryloylpropane sulfonic acid, or 2-(meth)acrylamide-2-methyl propane sulfonic acid, and a salt thereof; a nonionic hydrophilic monomer such as (meth)acrylamide, N-substituted (meth)acrylate, 2-hydroxyethyl(meth)acrylate, 2-hydroxypropyl(meth)acrylate, methoxy polyethylene glycol (meth)acrylate, or polyethylene glycol (meth)acrylate; and an amino group-containing unsaturated monomer such as (N,N)-dimethylaminoethyl(meth)acrylate or (N,N)-dimethylaminopropyl(meth)acrylamide, and a quaternary compound thereof may be used. The salt of the anionic monomer may be a metal salt, a divalent metal salt, an ammonium salt, or an organic amine salt.

The water-soluble ethylenically unsaturated monomer may have an acidic group of which at least a part is neutralized. The water-soluble ethylenically unsaturated monomer having an acidic group of which at least a part is neutralized may be prepared by neutralizing the acidic group of the water-soluble ethylenically unsaturated monomer using a neutralizing agent. In this case, as the neutralizing agent, a basic material capable of neutralizing an acidic group, such as sodium hydroxide (or caustic soda), potassium hydroxide, or ammonium hydroxide may be used.

Meanwhile, the internal crosslinking agent may serve to polymerize the water-soluble ethylenically unsaturated monomers described above by crosslinking unsaturated bonds thereof.

The internal crosslinking agent may be a (meth)acrylate-based compound in which a crosslinking reaction proceeds by a free-radical polymerization (FRP) reaction. Specifically, the internal crosslinking agent may be one or more compounds selected from the group consisting of ethylene glycol di(meth)acrylate, polyethylene glycol (meth)acrylate, polyethylene glycol di(meth)acrylate, propylene glycol di(meth)acrylate, polypropylene glycol (meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, and tetraethylene glycol di(meth)acrylate. More specifically, among them, the internal crosslinking agent may be polyethylene glycol di(meth)acrylate.

Meanwhile, in the composition, as the polymerization initiator, a thermal polymerization initiator or a photo-polymerization initiator by UV irradiation may be used according to a polymerization method. However, even when the polymerization is performed by the photo-polymerization method, a certain amount of heat may be generated by irradiation with ultraviolet rays, and a certain amount of heat is generated according to the progression of the polymerization reaction, which is an exothermic reaction, and therefore, a thermal polymerization initiator may be additionally included.

As the photo-polymerization initiator, a compound capable of forming a radical by light such as ultraviolet rays may be used. As the photo-polymerization initiator, one or more selected from the group consisting of benzoin ether, dialkyl acetophenone, hydroxyl alkylketone, phenyl glyoxylate, benzyl dimethyl ketal, acyl phosphine, and $\alpha$-aminoketone may be used. Meanwhile, specific examples of the acyl phosphine include diphenyl(2,4,6-trimethylbenzoyl)phosphine oxide, bis(2,4,6-trimethylbenzoyl)phenylphosphine oxide, and ethyl(2,4,6-trimethylbenzoyl)phenylphosphinate.

In addition, as the thermal polymerization initiator, one or more selected from the group consisting of a persulfate-based initiator, an azo-based initiator, hydrogen peroxide, and ascorbic acid may be used. Specifically, examples of the persulfate-based initiator include sodium persulfate ($Na_2S_2O_8$), potassium persulfate ($K_2S_2O_8$), and ammonium persulfate (($NH_4)_2S_2O_8$).

Specifically, the polymerization method is largely divided into thermal polymerization and photo-polymerization according to a polymerization energy source. The thermal polymerization may be performed in a reactor equipped with a stirring shaft, such as a kneader, and the photo-polymerization may be performed in a reactor equipped with a movable conveyor belt.

The hydrous gel polymer of the present invention may be prepared by the polymerization reaction that proceeds by feeding a composition containing a water-soluble ethylenically unsaturated monomer, an internal crosslinking agent, and a polymerization initiator to a polymerization reactor, and in this case, the amount of the internal crosslinking agent in the composition may be 0.01 to 5 parts by weight with respect to 100 parts by weight of the water-soluble ethylenically unsaturated monomer. For example, the amount of the internal crosslinking agent may be 0.01 parts by weight or more, 0.05 parts by weight or more, 0.1 parts by weight, or 0.2 parts by weight or more, and 5 parts by weight or less, 3 parts by weight or less, 2 parts by weight or less, 1 part by weight or less, or 0.5 parts by weight or less, with respect to 100 parts by weight of the water-soluble ethylenically unsaturated monomer. When the content of the internal crosslinking agent is excessively low, crosslinking does not occur sufficiently, which makes it difficult to realize an appropriate level or higher of strength, and when the content of the internal crosslinking agent is excessively high, an internal crosslinking density increases, which makes it difficult to realize a desired water retention capacity.

The composition of the present invention may be prepared in the form of a solution dissolved in a solvent. In this case, as a usable solvent, a solvent capable of dissolving the raw materials described above may be used. For example, as the solvent, water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethylether, toluene, xylene, butyrolactone, carbitol, methyl cellosolve acetate, N,N-dimethylacetamide, or a mixture thereof may be used.

Next, a step of drying and pulverizing the hydrous gel polymer obtained through the polymerization reaction to obtain super absorbent polymer particles may be performed. In this case, in order to increase the efficiency in drying the hydrous gel polymer, a chopping (coarse pulverization) step may be additionally performed. The "chopping" may mean coarsely pulverizing the hydrous gel polymer before the drying step, as distinguished from pulverization performed in a pulverization step described below.

As a pulverizer used in the chopping step, specifically, one selected from the group consisting of a vertical pulverizer, a turbo cutter, a turbo grinder, a rotary cutter mill, a cutter mill, a disc mill, a shred crusher, a crusher, a chopper, and a disc cutter may be used.

Subsequently, the chopped hydrous gel polymer may be subjected to a drying step. The drying step may include primary drying and secondary drying.

According to an exemplary embodiment of the present invention, the hydrous gel polymer is subjected to primary drying in a hot air dryer to obtain a primary dried substance. The hot air dryer may be a device for directly evaporating and discharging the moisture in an object to be dried by applying heat through high-temperature air (hot air) to reach a desired moisture content. In the present specification, the hot air dryer may directly dry an object to be dried with hot air while agitating the object to be dried by a rotating drum or the like. In this case, as the hot air dryer, a kiln dryer, a tube bundle dryer, a rotary dryer, or the like may be used, and in the present invention, a rotary dryer may be used.

The rotary dryer may include a central tube in a rotating drum, and one or more hot air supply tubes may be attached to the central tube. The hydrous gel polymer introduced into the rotary dryer is agitated by rotation of the rotating drum, and may be heated by hot air supplied from one or more hot air supply tubes. Since the hot air directly comes into contact with the hydrous gel polymer introduced into the rotary dryer, drying may be efficiently performed, and a drying time may be shortened.

In this case, a temperature of the hot air supplied from the hot air supply tube in the rotary dryer may be 100°C or higher, 110°C or higher, or 120°C or higher, and 200°C or lower, 190°C or lower, or 180°C or lower.

In addition, a wind speed of the hot air may be 20 m/s or more, 22 m/s or more, or 24 m/s or more, and 30 m/s or less, 29 m/s or less, or 27 m/s or less. The primary drying is performed by operating the rotary dryer at the temperature and wind speed of the hot air in the rotary dryer within the above ranges, such that a moisture content of the primary dried substance desired in the present invention may be obtained.

According to an exemplary embodiment of the present invention, the moisture content of the primary dried substance may be 20 wt% or more, 23 wt% or more, or 25 wt% or more, and 35 wt% or less, 32 wt% or less, or 30 wt% or less. The drying is performed so that the moisture content of the primary dried substance is within the above range, such that the primary dried substance may be put into a thermal conduction dryer described below in a state in which it is not excessively dried in the hot air dryer, and then may be subjected to secondary drying.

When the moisture content of the primary dried substance is less than 20 wt%, a content of fine particles of the primary dried substance may be excessively increased. When the moisture content of the primary dried substance exceeds 35 wt%, adhesiveness of the primary dried substance is excessively increased, which makes it difficult to recover the primary dried substance in the hot air dryer. In this case, the moisture content may be measured by a moisture meter (AND MX_50).

According to an exemplary embodiment of the present invention, the primary dried substance may be subjected to secondary drying in a thermal conduction dryer to obtain a secondary dried substance.

The thermal conduction dryer may have a jacket structure in which a heat medium (heat medium oil or steam) flows, and may be a dryer in which an object to be dried is indirectly heated and dried by receiving heat energy from the outside of the jacket by conduction. In the present specification, the thermal conduction dryer may perform indirect drying while agitating the object to be dried by a paddle or screw having a jacket structure. In this case, as the thermal conduction dryer, a disc dryer, a screw dryer, a paddle dryer, a drum dryer, an agitated dryer, a thin film dryer, and the like may be used depending on the structure and type of heat transfer, and in the present invention, a paddle dryer may be used.

The paddle dryer may include an agitator disposed in a horizontal direction, and the agitator may include one or more paddles. The agitator in the paddle dryer is accompanied by rotation, a heat source through heat medium oil or steam flows inside the paddle having a jacket structure, and the object to be dried may be indirectly dried by contact with the paddle and inner wall surface. Therefore, thermal efficiency of the paddle dryer may be maximized by heat conduction by friction.

Meanwhile, a temperature of the heat medium (heat medium oil or steam) flowing inside the agitator provided in the paddle dryer and the paddle attached to the agitator may be 100°C or higher, 110°C or higher, 120°C or higher, or 130°C or higher, and 200°C or lower, 190°C or lower, 180°C or lower, or 170°C or lower. The heat medium is heated within the above range, such that the secondary drying performed in the paddle dryer may be performed within the above temperature range.

The agitator in the paddle dryer may be rotated at 10 rpm or more, 15 rpm or more, 20 rpm or more, or 25 rpm or more, and 50 rpm or less, 45 rpm or less, 40 rpm or less, or 35 rpm or less. In this case, the rotations per minute (rpm) may represent a unit of rotations per minute of the agitator. When the agitator of the paddle dryer is rotated within the above range, secondary drying is smoothly performed, and thus, the problem of introducing an undried substance into a subsequent pulverization step may be prevented.

According to an exemplary embodiment of the present invention, the moisture content of the secondary dried substance may be 8 wt% or more, 10 wt% or more, or 12 wt% or more, and 20 wt% or less, 18 wt% or less, or 16 wt% or less. When the drying is performed so that the moisture content of the secondary dried substance is within the above range, it may be possible to realize a desired level of absorbency of the finally prepared super absorbent polymer particles.

Meanwhile, for example, when the primary drying or the secondary drying is performed in a band dryer, drying uniformity of the object to be dried may be reduced. The band dryer may be, for example, a conveyor belt, and in such a dryer, an object to be dried is loaded on a conveyor (metal mesh, perforated plate, or the like), and the object to be dried may be dried by ventilating the top with hot air while moving the object to be dried. However, since the object to be dried is not agitated and dried as it is in a form (like a block form) loaded on the conveyor, a part of the object to be dried (the inside of the block form) may be undried, and thus overdrying may be performed. However, as the overdrying is performed, an absorption rate (vortex) and absorbency of the super absorbent polymer particles may be deteriorated, and fine particles may be excessively generated in the pulverization step. Therefore, in order to prevent this, according to an exemplary embodiment of the present invention, a hot air dryer and a thermal conduction dryer for agitating and drying the object to be dried may be used.

The hot air dryer is easy to improve the absorption rate of the object to be dried by maintaining pores of the object to be dried by rotation of a rotating drum or the like, but the drying capacity is low compared to the size of the equipment since a filling level of the object to be dried in the rotating drum in the hot air dryer should be input within 15% of the total capacity. In addition, the drying uniformity of the object to be dried by the hot air dryer may be relatively low.

On the other hand, the thermal conduction dryer has a high drying capacity and may dry the object to be dried with high drying uniformity, but may reduce pores of the object to be dried due to high shear applied to the object to be dried. Therefore, the absorption rate (vortex) of the object to be dried may be deteriorated.

In order to compensate for the disadvantages of the hot air dryer and the thermal conduction dryer, in the present invention, the hot air dryer and the thermal conduction dryer may be connected in series. As described above, the primary drying is performed using the hot air dryer to first maintain pores of the hydrous gel polymer, and the secondary drying is performed using the thermal conduction dryer, such that the drying uniformity of the secondary dried substance may be further improved. As described above, the hot air dryer and the thermal conduction dryer are connected in series and the primary drying and secondary drying are performed, such that an undried substance may be prevented from being introduced into a subsequent pulverization step, and physical properties of the finally completed super absorbent polymer particles may be easily secured. In this case, the physical properties of the super absorbent polymer particles may refer to properties of absorption originally desired by the super absorbent polymer particles, and specifically, may be properties related to absorption such as absorbency and an absorption rate.

Next, a step of pulverizing the secondary dried substance obtained by the primary and secondary drying steps to obtain super absorbent polymer particles may be performed. The pulverization step may be performed one time, but may be performed, for example, one or more times. According to the present invention, a classification step may be further performed after the pulverization step. Furthermore, the classification may be performed after each pulverization.

For example, primary pulverization for pulverizing the secondary dried substance may be performed. As a pulverizer used at this time, specifically, a ball mill, a pin mill, a hammer mill, a screw mill, a roll mill, a disc mill, or a jog mill may be used.

Next, the primary pulverized product, after the primary pulverization is completed, may be subjected to primary classification based on a specific particle size using a standard mesh sieve according to the ASTM standard. In this case, the specific particle size may be a standard particle size of particles classified in order to perform secondary pulverization. Through such classification, it is possible to classify the primary pulverized product into particles having a particle size smaller than the specific particle size and particles having a particle size larger than the specific particle size. For example, the primary pulverized product may be put into a mesh set and classified into particles larger than #40 (larger than 425 $\mu$m) and particles smaller than #40 (smaller than 425 $\mu$m) based on the mesh of #40.

Subsequently, the particles having a particle size larger than the specific particle size classified by the primary classification may be additionally pulverized and then subjected to secondary classification to obtain a secondary pulverized product. In this case, the secondary pulverization may be performed with the same pulverizer used in the primary pulverization.

After the secondary pulverization, secondary classification may be performed to manage physical properties of the finally commercialized super absorbent polymer particles. In the secondary classification, the standard mesh sieve according to the ASTM standard used in the primary classification may be used, and a mixture of particles having a particle size smaller than the specific particle size classified in the primary classification and the secondary pulverized product pulverized in the secondary pulverization may be finally classified according to an appropriate particle size. In this case, the appropriate particle size (D50) may be a particle size of 150 pm to 850 pm, and particles having such a particle size may be classified as normal particles. On the other hand, particles having a particle size of less than 150 $\mu$m may be classified as fine particles. Such a particle size may be measured according to European Disposables and Nonwovens Association (EDANA) standard EDANA WSP 220.3 method.

Through a series of pulverization steps, normal particles, that is, super absorbent polymer particles may be prepared.

Thereafter, the preparation method may further include crosslinking a surface of the prepared super absorbent polymer particles in the presence of a surface crosslinking agent to prepare super absorbent polymer particles each having a surface on which a crosslinked layer is at least partially formed. In this case, the surface crosslinked layer may be produced from a surface crosslinking agent, the surface crosslinking agent may include a polyhydric epoxy compound, and the polyhydric epoxy compound may be a glycidyl ether compound of a polyhydric alcohol.

Specifically, the surface crosslinking agent may include one or more polyhydric epoxy compounds selected from the group consisting of ethyleneglycol diglycidyl ether, diethyleneglycol diglycidyl ether, triethyleneglycol diglycidyl ether, tetraethyleneglycol diglycidyl ether, glycerin polyglycidyl ether, and sorbitol polyglycidyl ether.

The surface crosslinking agent may be mixed with the super absorbent polymer particles in a solution state, specifically, in a surface crosslinking solution state dissolved in a solvent. The surface crosslinking solution may include water and methanol in addition to the surface crosslinking agent. In general, the surface crosslinking solution is applied to the surfaces of the super absorbent polymer particles. Therefore, a surface crosslinking reaction occurs on the surfaces of the super absorbent polymer particles, which improves crosslinkability on the surfaces of the particles without substantially affecting the inside of the particles. Accordingly, the surface crosslinked super absorbent polymer particles have a higher degree of crosslinking near the surface than the inside. The surface crosslinking reaction and drying may be simultaneously performed by heating the polymer to which the surface crosslinking agent is added.

Hereinafter, the present invention will be described in more detail by Examples. However, the following Examples are provided for illustrating the present invention. It is apparent to those skilled in the art that various modifications and alterations may be made without departing from the scope and spirit of the present invention, and the scope of the present invention is not limited thereto.

**Examples**

**Example 1**

(1) Preparation of Hydrous Gel Polymer

In a 3 L glass vessel equipped with a stirrer and a thermometer, 1,000 g of acrylic acid, 1.6 g of polyethylene glycol diacrylate (PEGDA) as an internal crosslinking agent, 0.08 g of diphenyl(2,4,6-trimethylbenzoyl)phosphine oxide as a photo-polymerization initiator, 1.2 g of sodium persulfate as a thermal polymerization initiator, and 1,235 g of a caustic soda (NaOH) solution as a neutralizing agent were mixed at room temperature so that a solid content was 45.0 wt%, thereby preparing a composition.

Thereafter, the composition was fed at a speed of 500 to 2,000 mL/min onto a conveyor belt on which a belt having a width of 10 cm and a length of 2 m moved at a speed of 10 cm/min. At this time, a polymerization reaction was allowed to proceed for 60 seconds by irradiation with ultraviolet rays with an intensity of 10 mW/cm$^2$ while feeding the monomer composition, and after the polymerization reaction was completed, pulverization was performed with a chopper, thereby obtaining a hydrous gel polymer having a moisture content of 65 wt%.

(2) Preparation of Super Absorbent Polymer Particles

Next, 1 kg of the hydrous gel polymer was fed to a rotary dryer, and primary drying was performed until the moisture content of the primary dried substance reached 24.9 wt%. At this time, the hydrous gel polymer was dried with hot air supplied from a hot air supply tube of the rotary dryer at a temperature of 100°C and a wind speed of 26 m/s, thereby obtaining a primary dried substance. At this time, the moisture content was measured by a moisture meter (AND MX_50, heating temperature: 180°C, heating time: 40 minutes).

Subsequently, the primary dried substance was put into a paddle dryer, and secondary drying was performed until the moisture content of the secondary dried substance reached 12.0 wt%. At this time, the secondary drying was also performed at a temperature of 105°C through a heat medium at 105°C flowing inside of an agitator provided in the paddle dryer and a paddle attached to the agitator, and the agitator in the paddle dryer was rotated at 10 rpm.

Next, the secondary dried substance was subjected to primary pulverization with a roll mill to obtain a primary pulverized product. The primary pulverized product was put into a mesh set (mesh set obtained by combining meshes #6, #10, #20, #25, #30, #40, #50, #70, and #100 according to the ASTM standard), and primary classification was performed to classify the particles into particles larger than #40 (larger than 425 μm) and particles smaller than #40 (smaller than 425 μm). The particles larger than #40 (larger than 425 μm) classified in the primary classification were subjected to secondary pulverization with the roll mill to obtain a secondary pulverized product. Finally, a mixture of the particles smaller than #40 (smaller than 425 μm) classified in the primary classification and the secondary pulverized product subjected to the secondary pulverization was subjected to secondary classification, thereby obtaining super absorbent polymer particles having a particle size of 150 pm to 850 μm. At this time, the secondary classification was performed using the same mesh set as in the primary classification.

**Example 2**

Super absorbent polymer particles were prepared in the same manner as that of Example 1, except that primary drying was performed until a moisture content of the first dried substance reached 25.5 wt%, and secondary drying (number of revolutions of agitator: 30 rpm) was performed until a moisture content of the second dried substance reached 12.9 wt%.

**Example 3**

Super absorbent polymer particles were prepared in the same manner as that of Example 1, except that primary drying was performed until a moisture content of the first dried substance reached 21.9 wt%, and secondary drying (number of revolutions of agitator: 50 rpm) was performed until a moisture content of the second dried substance reached 10.8 wt%.

**Example 4**

Super absorbent polymer particles were prepared in the same manner as that of Example 1, except that primary drying was performed until a moisture content of the first dried substance reached 33.6 wt%, and secondary drying was performed until a moisture content of the second dried substance reached 11.4 wt%.

**Example 5**

Super absorbent polymer particles were prepared in the same manner as that of Example 1, except that primary drying was performed until a moisture content of the first dried substance reached 29.1 wt%, and secondary drying (temperature: 200°C) was performed until a moisture content of the second dried substance reached 11.8 wt%.

**Example 6**

Super absorbent polymer particles were prepared in the same manner as that of Example 1, except that primary drying was performed until a moisture content of the first dried substance reached 29.3 wt%, and secondary drying (temperature: 200°C, number of revolutions of agitator: 50 rpm) was performed until a moisture content of the second dried substance reached 7.5 wt%.

**Example 7**

Super absorbent polymer particles were prepared in the same manner as that of Example 1, except that primary drying was performed until a moisture content of the first dried substance reached 31.4 wt%, and secondary drying was performed until a moisture content of the second dried substance reached 21.3 wt%.

**Example 8**

Super absorbent polymer particles were prepared in the same manner as that of Example 1, except that primary drying was performed until a moisture content of the first dried substance reached 16.5 wt%, and secondary drying was performed until a moisture content of the second dried substance reached 10.3 wt%.

**Example 9**

Super absorbent polymer particles were prepared in the same manner as that of Example 1, except that primary drying was performed until a moisture content of the first dried substance reached 37.5 wt%, and secondary drying was performed until a moisture content of the second dried substance reached 12.9 wt%.

**Comparative Examples**

**Comparative Example 1**

Super absorbent polymer particles were prepared in the same manner as that of Example 1, except that primary drying was performed in a rotary dryer (temperature of hot air: 100°C, wind speed: 26 m/s) until a moisture content of the first dried substance reached 10.2 wt%, and second drying was not performed.

**Comparative Example 2**

Super absorbent polymer particles were prepared in the same manner as that of Example 1, except that primary drying was performed in a rotary dryer (temperature of hot air: 250°C, wind speed: 8 m/s) until a moisture content of the first dried substance reached 11.0 wt%, and second drying was not performed.

**Comparative Example 3**

Super absorbent polymer particles were prepared in the same manner as that of Example 1, except that primary drying was performed in a paddle dryer (temperature: 105°C, number of revolutions of agitator: 10 rpm) until a moisture content of the first dried substance reached 12.6 wt%, and second drying was not performed.

**Comparative Example 4**

Super absorbent polymer particles were prepared in the same manner as that of Example 1, except that primary drying was performed in a paddle dryer (temperature: 200°C, number of revolutions of agitator: 50 rpm) until a moisture content of the first dried substance reached 11.0 wt%, and second drying was not performed.

**Comparative Example 5**

Super absorbent polymer particles were prepared in the same manner as that of Example 1, except that primary drying was performed in a paddle dryer (temperature: 105°C, number of revolutions of agitator: 10 rpm) until a moisture content of the first dried substance reached 31.1 wt%, and second drying was performed in a rotary dryer (temperature: 100°C, wind speed: 26 m/s) until a moisture content of the second dried substance reached 12.6 wt%.

**Experimental Examples**

The super absorbent polymer particles prepared in Examples and Comparative Examples were measured by the following methods. The measurement results are shown in Tables 1 and 2.

1) Moisture Content

The moisture content was measured through a change in weight caused by evaporating moisture by heating the primary dried substance and the secondary dried substance with a halogen lamp (400 W) in a moisture meter (AND MX_50) during the preparation of the super absorbent polymer particles of Examples and Comparative Examples. Specifically, the moisture content was measured according to the following procedure.

① The measurement conditions of the moisture meter (heating temperature: 180°C, heating time: 40 minutes) were set.
② The weight was stabilized to zero (0) in a state where no sample was present on a sample pan.
③ 5 g (error: 0.02%) of a sample of the primary dried substance or the secondary dried substance to be measured was sampled and evenly loaded on the sample pan.
④ After the measurement was completed, a moisture content was confirmed.

2) Drying Uniformity

The drying uniformity may refer to uniformity of moisture content for each particle size of the super absorbent polymer particles. Specifically, the drying uniformity of each of the super absorbent polymer particles prepared by Examples and Comparative Examples was measured according to Equation 1.

[Equation 1]

$$\text{Drying uniformity (wt\%)} = \frac{100\% - \text{Std}}{100\%}$$

At this time, the drying uniformity was measured by sampling 200 g of a sample of the finally prepared super absorbent polymer particles. 200 g of the secondary dried substance was put into a mesh set obtained by combining meshes #6, #10, #20, #25, #30, #40, #50, #70, and #100, and the mesh set was mounted on a sieve shaker. The sieve shaker was operated at an amplitude of 1.5 mm for 10 minutes to classify the super absorbent polymer particles.

The particles were separated according to the particle size of each mesh, and then a moisture content of the separated particles was measured using a moisture meter (AND MX_50: heating temperature: 180°C, heating time: 40 minutes). The standard deviation of the moisture content of the particles for each particle size is represented by "Std" in Equation 1.

3) Average Particle Size After Drying and Average Particle Size After Pulverization

The average particle size after drying was measured by the following method.

First, the secondary dried substance was classified by the same method as the method of measuring "Drying Uniformity" described above. Specifically, the secondary dried substance (200 g) obtained by the secondary drying in each of Examples and Comparative Examples was input to a mesh set obtained by combining meshes #6, #10, #20, #25, #30, #40, #50, #70, and #100, the mesh set was mounted on a sieve shaker (time: 10 minutes, amplitude: 1.5), and then classification was performed. As such, the weight fraction of the secondary dried substance classified by the meshes (#6, #10, #20, #25, #30, #40, #50, #70, and #100) was analyzed. A value obtained by calculating the arithmetic average of the particles for each mesh based on the weight fraction for each mesh is the "average particle size after drying" shown in Tables 1 and 2.

Meanwhile, the "average particle size after pulverization" was measured by the same method as the method of measuring the "average particle size after drying" described above. However, unlike the "average particle size after drying" measured for the secondary dried substance, the "average particle size after pulverization" was measured by classifying the mixture (the particles smaller than #40 classified in the primary classification and the secondary pulverized product subjected to the secondary pulverization) which was further subjected to the pulverization step.

4) Content of Fine Particles

In the method for preparing super absorbent polymer particles of Examples and Comparative Examples, before the mixture (the particles smaller than #40 classified in the primary classification and the secondary pulverized product subjected to secondary pulverization) was subjected to secondary classification, the weight of the mixture was measured. Thereafter, the secondary classification was performed, and then the weight of the fine particles having a particle size of 150 pm or less was measured. The percentage of the weight of the fine particles to the weight of the mixture was represented by the "content of fine particles". That is, the content of the fine particles may refer to a content of fine particles included in the mixture.

5) Absorption Rate (Vortex)

The absorption rate of the super absorbent polymer particles of each of Examples and Comparative Examples was measured by the following methods.

50 ml of 0.9% saline maintained at a temperature of 24°C was put into a 100 ml beaker placed on a magnetic stirrer using a measuring cylinder. The magnetic stirrer was operated at a speed at which the lowest surface (central space) of the vortex generated in the 100 ml beaker reached a magnetic bar during stirring. The time was measured while introducing, into the vortex, the super absorbent polymer particles (1.99 g to 2.01 g) corresponding to the particle sizes of #40 to #50 (300 $\mu$m to 425 $\mu$m) among the super absorbent polymer particles of Examples and Comparative Examples. As described above, since a viscosity was generated by introducing the super absorbent polymer particles into the saline, the value obtained by measuring the time in seconds until the vortex disappeared and the liquid level became horizontal was defined as the "absorption rate" of the present invention.

[Table 1]

| | | Example 1 | Example 2 | Example 3 | Example 4 | Example 5 | Example 6 | Example 7 | Example 8 | Example 9 |
|---|---|---|---|---|---|---|---|---|---|---|
| Drying conditions | Primary dryer (drying conditions[1]) | Rotary (100°C 26 m/s) | Rotary (100°C 26 m/s) | Rotary (100°C 26 m/s) | Rotary (100°C 26 m/s) | Rotary (100°C 26 m/s) | Rotary (100°C 26 m/s) | Rotary (100°C 26 m/s) | Rotary (100°C 26 m/s) | Rotary (100°C 26 m/s) |
| | Primary drying moisture content (wt%) | 24.9 | 25.5 | 21.9 | 33.6 | 29.1 | 29.3 | 31.4 | 16.5 | 37.5 |
| | Secondary dryer (drying conditions[1]) | Paddle (105°C 10 rpm) | Paddle (105°C 30 rpm) | Paddle (105°C 50 rpm) | Paddle (105°C 10 rpm) | Paddle (200°C 10 rpm) | Paddle (200°C 50 rpm) | Paddle (105°C 10 rpm) | Paddle (105°C 10 rpm) | Paddle (105°C 10 rpm) |
| | Secondary drying moisture content (wt%) | 12.0 | 12.9 | 10.8 | 11.4 | 11.8 | 7.5 | 21.3 | 10.3 | 12.9 |
| Measurement results | Drying uniformity (%) | 98.3 | 98.4 | 98.4 | 98.5 | 98.3 | 98.0 | 98.3 | 96.7 | 98.5 |
| | Average particle size after drying | 3,472 | 3,495 | 3,489 | 3,497 | 3,533 | 3,434 | 3,671 | 2,249 | 3,466 |
| | Average particle size after oulverizatio n | 354 | 359 | 354 | 353 | 362 | 346 | cannot be pulveri zed | 345 | 351 |
| | Content of fine particles (wt%) | 8.8 | 9.3 | 3.9 | 9.6 | 8.9 | 11.3 | _2) | 11.8 | 7.5 |
| | Absorption rate (sec) | 21 | 21 | 22 | 21 | 21 | 23 | _2) | 23 | 26 |

1) The drying conditions are drying conditions performed in the corresponding dryer, which indicate the temperature and wind speed of the hot air from the hot air supply tube in the case of the rotary dryer, and the temperature of the heat medium and the number of revolutions in the case of the paddle dryer.

2) Since the secondary dried substance of Example 7 could not be pulverized and was not subjected to the pulverization step, the content of fine particles and the absorption rate could not be measured.

EP 4 375 314 A1

[Table 2]

| | | Comparative Example 1 | Comparative Example 2 | Comparative Example 3 | Comparative Example 4 | Comparative Example 5 |
|---|---|---|---|---|---|---|
| Drying conditions | Primary dryer (drying conditions[1]) | Rotary (100°C, 26 m/s) | Rotary (250°C, 8 m/s) | Paddle (105°C, 10 rpm) | Paddle (200°C, 50 rpm) | Paddle (105°C, 10 rpm) |
| | Primary drying moisture content (wt%) | 10.2 | 11.0 | 12.6 | 11.0 | 31.1 |
| | Secondary dryer (drying conditions[1]) | - | - | - | - | Rotary (100°C, 26 m/s) |
| | Secondary drying moisture content (wt%) | - | - | - | - | 12.6 |
| Measurement results | Drying uniformity (%) | 96.1 | 95.7 | 98.6 | 98.6 | 98.0 |
| | Average particle size after drying | 2, 176 | 3, 076 | 2,523 | 2,568 | 2,528 |
| | Average particle size after pulverization | 340 | 389 | 371 | 439 | 373 |
| | Content of fine particles (wt%) | 12.4 | 12.5 | 7.8 | 6.9 | 7.9 |
| | Absorption rate (sec) | 22 | 23 | 26 | 28 | 27 |
| 1) The drying conditions are drying conditions performed in the corresponding dryer, which indicate the temperature and wind speed of the hot air from the hot air supply tube in the case of the rotary dryer, and the temperature of the heat medium and the number of revolutions in the case of the paddle dryer. | | | | | | |

Referring to Tables 1 and 2, in the cases of Examples in which the super absorbent polymer particles were prepared by performing the primary drying using the rotary dryer and the secondary drying using the paddle dryer in the drying step, it could be confirmed that the absorption rate was improved by maintaining the pores by the rotary dryer, and the drying uniformity was improved by the paddle dryer, and as a result, the content of fine particles of the super absorbent polymer particles was reduced.

On the other hand, in Comparative Example 1, the super absorbent polymer particles were dried using only a rotary dryer until the moisture content of the primary dried substance, that is, the final content of the primary dried substance reached 10.2 wt%, secondary drying was not performed, and the drying step was performed using one type of dryer. In Comparative Example 1, the primary drying was performed at a level similar to the moisture content of the secondary dried substance, but it could be confirmed that the drying uniformity was reduced by the rotary dryer, and the content of fine particles was increased. In Comparative Example 2, the drying step was performed using only a rotary dryer as in Comparative Example 1, but the drying was performed by changing the operation conditions of the rotary dryer. Also, in Comparative Example 2, it could be confirmed that the results similar to those in Comparative Example 1 were obtained since only the rotary dryer was used.

Meanwhile, in Comparative Example 3, the super absorbent polymer particles were dried using only a paddle dryer until the moisture content of the primary dried substance reached 12.6 wt%, secondary drying was not performed, and the drying step was performed using one type of dryer. It could be confirmed that the absorption rate was deteriorated compared to Examples in which the secondary drying was further performed using two types of dryers. That is, it could be confirmed that the stress was generated in the object to be dried due to high shear applied by the paddle of the paddle dryer, the pores were reduced due to the stress, and thus, the absorption rate was deteriorated. In Comparative Example 4, the drying step was performed using only a paddle dryer as in Comparative Example 3, but the drying was performed by changing the operation conditions of the paddle dryer. Also, it could be confirmed that the results similar to those in Comparative Example 3 were obtained since only the paddle dryer was used.

Meanwhile, in Comparative Example 5, the super absorbent polymer particles were prepared by performing the primary drying using a paddle dryer and the secondary drying using a rotary dryer, and the types of primary and secondary dryers were exchanged unlike Examples. As described above, when the paddle dryer was used, the pores of the dried substance were reduced, and the absorption rate was deteriorated. In Comparative Example 5, the paddle dryer was first used as the primary dryer, and the primary dried substance with reduced pores was put into the rotary dryer as the secondary dryer. However, it could be confirmed through the deteriorated absorption rate that the pores of the primary dried substance with pores which were already reduced in the paddle dryer were maintained by the rotating drum of the rotary dryer.

**Claims**

1.  A method for preparing super absorbent polymer particles, comprising:

    feeding a composition containing a water-soluble ethylenically unsaturated monomer having an acidic group of which at least a part is neutralized, an internal crosslinking agent, and a polymerization initiator to a polymerization reactor and subjecting the composition to a polymerization reaction to obtain a hydrous gel polymer;
    primary drying the hydrous gel polymer in a hot air dryer to obtain a primary dried substance;
    secondary drying the primary dried substance in a thermal conduction dryer to obtain a secondary dried substance; and
    pulverizing the secondary dried substance to obtain the super absorbent polymer particles.

2.  The method of claim 1, further comprising, before the primary drying of the hydrous gel polymer, chopping the hydrous gel polymer.

3.  The method of claim 1, further comprising, after the pulverizing of the secondary dried substance to obtain the super absorbent polymer particles, crosslinking surfaces of the super absorbent polymer particles in the presence of a surface crosslinking agent to form a surface crosslinked layer on at least a portion of the surfaces of the super absorbent polymer particle.

4.  The method of claim 1, wherein the hot air dryer and the thermal conduction dryer are connected in series.

5.  The method of claim 1, wherein a moisture content of the primary dried substance is from 20 wt% to 35 wt%.

6.  The method of claim 1, wherein a moisture content of the secondary dried substance is from 8 wt% to 20 wt%.

7.  The method of claim 1, wherein the hot air dryer is a rotary dryer, and the thermal conduction dryer is a paddle dryer.

8.  The method of claim 7, wherein the rotary dryer includes a central tube and one or more hot air supply tubes attached to the central tube inside the rotary dryer,

    a temperature of hot air supplied from the one or more hot air supply tubes is from 100°C to 200°C, and
    a wind speed of the hot air is from 20 m/s to 30 m/s.

9.  The method of claim 7, wherein the paddle dryer includes an agitator, and
    the agitator is rotated at 10 rpm to 50 rpm.

10. The method of claim 1, wherein the water-soluble ethylenically unsaturated monomer is (meth)acrylic acid or a salt thereof.

【FIG. 1】

```
┌─────────────────────────┐
│     POLYMERIZATION       │
└─────────────────────────┘
             │
             ▼
┌─────────────────────────┐
│        CHOPPING          │
└─────────────────────────┘
             │
             ▼
┌─────────────────────────┐
│        PRIMARY           │
│        DRYING            │
└─────────────────────────┘
             │
             ▼
┌─────────────────────────┐
│       SECONDARY          │
│        DRYING            │
└─────────────────────────┘
             │
             ▼
┌─────────────────────────┐
│      PULVERIZATION       │
└─────────────────────────┘
```

<div align="center">**INTERNATIONAL SEARCH REPORT**</div>

| International application No. |
|---|
| **PCT/KR2023/007518** |

| | |
|---|---|
| **A.** | **CLASSIFICATION OF SUBJECT MATTER** |
| | **C08J 3/24**(2006.01)i; **C08J 3/12**(2006.01)i; **C08F 20/06**(2006.01)i; **F26B 3/18**(2006.01)i; **F26B 3/02**(2006.01)i |

According to International Patent Classification (IPC) or to both national classification and IPC

| | |
|---|---|
| **B.** | **FIELDS SEARCHED** |

Minimum documentation searched (classification system followed by classification symbols)

C08J 3/24(2006.01); B65G 15/30(2006.01); C08F 10/02(2006.01); C08F 2/10(2006.01); C08F 2/18(2006.01); C08F 20/04(2006.01); C08F 6/00(2006.01); C08F 6/24(2006.01); C08J 3/075(2006.01); C08J 3/12(2006.01); F26B 17/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고흡수성 수지(super absorbent polymer), 건조기(dryer), 열풍(hot air), 열전도 (thermal conduction), 로터리 건조기(rotary dryer), 패들 건조기(paddle dryer), 중합(polymerization), 분쇄(grinding)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | KR 10-2019-0077541 A (NIPPON SHOKUBAI CO., LTD.) 03 July 2019 (2019-07-03)<br>See claims 1-13; and paragraphs [0094]-[0258]. | 1-10 |
| Y | JP 5405304 B2 (NIPPON SHOKUBAI CO., LTD.) 05 February 2014 (2014-02-05)<br>See paragraphs [0265]-[0268]. | 1-10 |
| A | JP 2022-132184 A (NIPPON SHOKUBAI CO., LTD.) 07 September 2022 (2022-09-07)<br>See entire document. | 1-10 |
| A | KR 10-2015-0141425 A (LG CHEM, LTD.) 18 December 2015 (2015-12-18)<br>See entire document. | 1-10 |
| A | KR 10-2011-0050947 A (LG CHEM, LTD.) 17 May 2011 (2011-05-17)<br>See entire document. | 1-10 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 September 2023** | **04 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/007518**

| Patent document cited in search report | | | Publication date (day/month/year) | Patent family member(s) | | | Publication date (day/month/year) |
|---|---|---|---|---|---|---|---|
| KR | 10-2019-0077541 | A | 03 July 2019 | CN | 109996833 | A | 09 July 2019 |
| | | | | CN | 109996833 | B | 11 February 2022 |
| | | | | CN | 109996835 | A | 09 July 2019 |
| | | | | CN | 109996835 | B | 29 July 2022 |
| | | | | EP | 3543279 | A1 | 25 September 2019 |
| | | | | EP | 3543279 | A4 | 19 August 2020 |
| | | | | EP | 3543280 | A1 | 25 September 2019 |
| | | | | EP | 3543280 | A4 | 02 September 2020 |
| | | | | JP | 2019-052285 | A | 04 April 2019 |
| | | | | JP | 2019-092863 | A1 | 17 October 2019 |
| | | | | JP | 2019-092864 | A1 | 17 October 2019 |
| | | | | JP | 6800998 | B2 | 16 December 2020 |
| | | | | JP | 6913107 | B2 | 04 August 2021 |
| | | | | JP | 6918407 | B2 | 11 August 2021 |
| | | | | KR | 10-2019-0077540 | A | 03 July 2019 |
| | | | | KR | 10-2560352 | B1 | 28 July 2023 |
| | | | | KR | 10-2560354 | B1 | 28 July 2023 |
| | | | | US | 11465126 | B2 | 11 October 2022 |
| | | | | US | 2019-0329219 | A1 | 31 October 2019 |
| | | | | US | 2019-0329220 | A1 | 31 October 2019 |
| | | | | WO | 2018-092863 | A1 | 24 May 2018 |
| | | | | WO | 2018-092864 | A1 | 24 May 2018 |
| JP | 5405304 | B2 | 05 February 2014 | CN | 101790546 | A | 28 July 2010 |
| | | | | CN | 101790546 | B | 08 May 2013 |
| | | | | EP | 2189478 | A1 | 26 May 2010 |
| | | | | EP | 2189478 | A4 | 23 February 2011 |
| | | | | EP | 2189478 | B1 | 09 March 2016 |
| | | | | EP | 2690114 | A1 | 29 January 2014 |
| | | | | EP | 2690114 | B1 | 05 December 2018 |
| | | | | US | 2010-0249320 | A1 | 30 September 2010 |
| | | | | US | 8188163 | B2 | 29 May 2012 |
| | | | | WO | 2009-028568 | A1 | 05 March 2009 |
| JP | 2022-132184 | A | 07 September 2022 | None | | | |
| KR | 10-2015-0141425 | A | 18 December 2015 | None | | | |
| KR | 10-2011-0050947 | A | 17 May 2011 | KR | 10-1257410 | B1 | 02 May 2013 |

Form PCT/ISA/210 (patent family annex) (July 2022)

**EP 4 375 314 A1**

EP 4 375 314 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220121702